(19) Europäisches Patentamt
European Patent Office
Office européen des brevets

(11) EP 0 658 561 B1

(12) **EUROPÄISCHE PATENTSCHRIFT**

(45) Veröffentlichungstag und Bekanntmachung des Hinweises auf die Patenterteilung:
**04.08.1999 Patentblatt 1999/31**

(51) Int. Cl.[6]: **C07F 9/09**, C08K 5/521, C08L 75/04

(21) Anmeldenummer: **94117991.3**

(22) Anmeldetag: **15.11.1994**

(54) **Hydroxyalkoxygruppen tragende oligomere Phosphorsäureester, ihre Herstellung und Verwendung**

Oligomeric phosphoric acid esters bearing hydroxyalkoxygroups, their preparation and use

Ester d'acides phosphoriques oligomères portant des groupes hydroxy alcoxy, leur préparation et leur utilisation

(84) Benannte Vertragsstaaten:
**AT BE CH DE DK ES FR GB GR IE IT LI NL PT SE**

(30) Priorität: **16.12.1993 DE 4342972**

(43) Veröffentlichungstag der Anmeldung:
**21.06.1995 Patentblatt 1995/25**

(73) Patentinhaber: **Clariant GmbH**
**65929 Frankfurt am Main (DE)**

(72) Erfinder: **Sicken, Martin, Dr.**
**D-51149 Köln (DE)**

(56) Entgegenhaltungen:
**EP-A- 0 004 747**
**DE-A- 1 518 747**
**DE-A- 2 036 587**
**DE-A- 2 036 595**
**US-A- 4 697 030**

- **CHEMICAL ABSTRACTS, vol. 085, no. 12, 20. September 1976, Columbus, Ohio, US; abstract no. 079067, NOMURA T ET AL 'Humidity- and fire-resistant polyurethane foams' & JP---7 613 892 (TOYODA AUTOMOBILE INDUSTRY CO., LTD.;JAPAN) 3. Februar 1976**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.16.7/3.6

## Beschreibung

Die Erfindung betrifft Gemische Hydroxyalkoxygruppen tragender oligomerer Phosphorsäureester sowie ihre Herstellung und Verwendung als reaktive Flammschutzmittel in Polyurethanschäumen.

Die Verwendung von Polyurethanschaum ist in Einsatzgebieten, die hohe Anforderungen an das Brandverhalten der eingesetzten Materialien stellen (z.B. Automobilinnenausstattung und Bauisolierungen), nur mit Hilfe des zusätzlichen Einsatzes von Flammschutzmitteln möglich. Ein Großteil dieser Flammschutzmittel, wie beispielsweise Tris(2-chlorethyl)phosphat, Tris(chlorisopropyl)phosphat, Tris(2,3-dichlorpropyl)phosphat sowie Tetrakis(2-chlorethyl)ethylendiphosphat, werden als Additive eingelagert, was bei thermischer Belastung zu deren teilweiser Emigration führen kann. Dieser nachteilige Effekt, der vor allem bei offenzelligen Schäumen eine erhebliche Rolle spielt, verursacht nicht nur mit der Zeit das Nachlassen der Flammschutzwirkung und damit die Erhöhung des einzusetzenden Flammschutzmittelanteils, sondern führt auch zur Kontamination der Umgebung des Produktes. So tragen solche additiven Zusätze beispielsweise zum sogenannten "Fogging", der Kondensation von verdampften flüchtigen Bestandteilen aus der Kraftfahrzeuginnenausstattung an der Windschutzscheibe bei. Diese Erscheinung kann nach DIN 75 2o1 quantitativ erfaßt werden.

Eine wesentliche Verbesserung in dieser Hinsicht bedeutet die Verwendung reaktiver (statt additiver) Flammschutzmittel; im Falle von Polyurethan z.B. von phosphor- und chlorhaltigen Polyolen, die allein oder im Gemisch mit konventionellen Polyolen mit Polyisocyanaten zur Reaktion gebracht und somit in das Polymergerüst kovalent eingebunden werden.

In der US-A-3639545 werden Phosphorsäureester mit Alkoxygruppen beschrieben, jedoch keine als Flammschatzmittel geeigneten oligomeren Gemische.

Produkte mit guter Flammschutzwirkung werden in der DE-PS 2o 36 595 beschrieben. Dabei handelt es sich um Gemische oligomerer Phosphorsäureester z.B. der allgemeinen Formel (1),

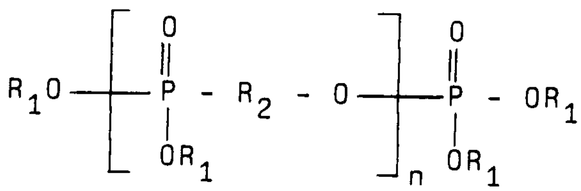

**(1)**

in denen n = 0 bis 4, $R_1$ ein halogenierter Alkyl- oder Arylrest und mindestens ein hydroxylhaltiger Rest der allgemeinen Formel (2), und $R_2$ ein Rest der allgemeinen Formel (3) ist, wobei in den Formeln (2) und (3) $R_3$ und $R_4$ ein Wasserstoffatom oder einen gegebenenfalls chlorsubstituierten Alkylrest, und m eine Zahl von 1 bis 4 bedeuten.

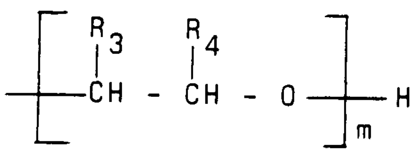

(2)

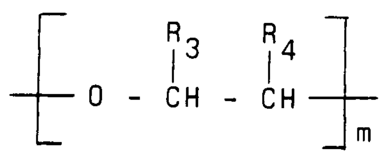

(3)

Die Herstellung der Produkte der Formel (1) erfolgt durch Umsetzung einer Verbindung der allgemeinen Formel (4), in der $R_5$ ein halogenierter Alkyl- oder Arylrest ist, mit Polyphosphorsäure oder einem Gemisch aus Polyphosphorsäure und Phosphorpentoxid und anschließende Umsetzung mit einem Epoxid der allgemeinen Formel (5),

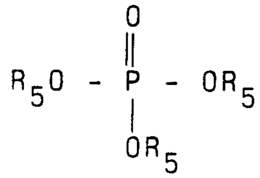

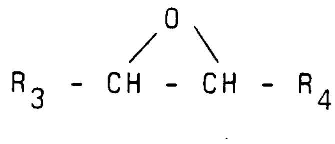

(4) (5)

Nach dem Verfahren der DE-PS 2o 36 595 zur Herstellung der Produkte der Formel (1) erhält man in der jeweils ersten Verfahrensstufe Gemische von Polyphosphorsäurepartialestern mit unterschiedlichem Kondensationsgrad und inhomogener Verteilung von Säure- und Estergruppen auf die einzelnen Moleküle, was zur Folge hat, daß etwa 5 bis 25 Masse% an neutralen Phosphorsäureestern entstehen. Da jedoch lediglich die sauren Ester in der jeweils nachfolgenden zweiten Verfahrensstufe mit Epoxiden Produkte ergeben, die hydroxylhaltige Reste der oben beschriebenen Formel (2) enthalten, ergibt sich zwangsläufig, daß die Endprodukte der Formel (1) auch hydroxylfreie Komponenten umfassen. Somit handelt es sich bei den nach der DE-PS 2o 36 595 erhaltenen Gemischen bezüglich ihrer Reaktion mit beispielsweise Isocyanaten um Mischungen aus reaktiven und - mit den oben beschriebenen Nachteilen behafteten - "additiven" Produkten, auch wenn gemäß DE-PS 2o 36 595 nur der Gemischanteil an hydroxylhaltigen (und somit reaktiven) Estern der Formel (1) beansprucht wird.

Weiterhin wird in der DE-PS 2o 36 587 ein Verfahren beschrieben, Reaktionsprodukte der allgemeinen Formel (1) durch Umsetzung von Phosphorpentoxid und/oder Polyphosphorsäure mit halogenierten Alkanolen und Phenolen und mit einem Epoxid der Formel (5) zu erhalten. Das Verfahren der DE-PS 2o 36 587 gewährleistet zwar die Herstellung ausschließlich hydroxylhaltiger Produkte, jedoch können auf die dort beschriebene Weise lediglich Gemische von Produkten erhalten werden, die im Durchschnitt gleich viele oder mehr Hydroxyalkoxygruppen als halogenhaltige Reste enthalten, da bei der im ersten Verfahrensschritt stattfindenden Alkoholyse von P-O-P-Gruppierungen jeweils gleichzeitig eine Ester- und eine Säurefunktion (P-O-H-Funktion) erzeugt werden, wobei letztere im zweiten Verfahrensschritt zu einem hydroxylhaltigen Rest abreagiert. Solche Gemische eignen sich aufgrund des daraus resultierenden hohen Gehaltes an Hydroxylgruppen [mindestens 5o Mol% der Reste $R_1$ in Formel (1)] jedoch nur bedingt als Flammschutzmittel für Polyurethan-Weichschäume.

Den in den DE-PS 2o 36 595 und DE-PS 2o 36 587 beschriebenen Gemischen ist über die erwähnten Nachteile hinaus gemeinsam, daß sie zur Erreichung der geforderten Flammschutzeffektivität als wesentlichen Bestandteil Halogene in gebundener Form enthalten. Dies ist von Nachteil, da halogenhaltige Produkte im Brandfalle korrosive Halogenwasserstoffe und unter bestimmten Umständen toxische Zersetzungsprodukte freisetzen können.

In der US-Patentschrift 43 82 o42 wird die Herstellung von oligomeren Phosphorsäureestern der Formel (6) beschrieben, in denen n = 0 bis 1o, R ein Alkyl- oder Haloalkylrest (C1 - C10) ist, und $R_1$ und $R_2$ Wasserstoffatome oder Alkyl- oder Haloalkylreste (C1 - C10) sind.

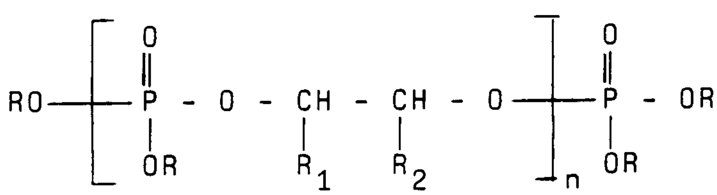

(6)

Die Herstellung der Produkte der Formel (6) erfolgt durch sukzessive Umsetzung von Phosphorpentoxid mit einem Orthophosphorsäureester der Formel (7), wobei R die oben beschriebene Bedeutung hat, sowie mit einem Epoxid der allgemeinen Formel (8), in dem $R_1$ und $R_2$ die oben genannte Bedeutung besitzen. Nach diesem Verfahren hergestellte Produkte enthalten somit keine hydroxylhaltigen Reste und sind demnach nur als additive Flammschutzmittel einsetzbar.

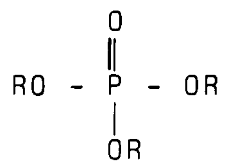

(7)

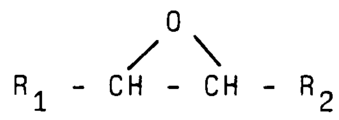

(8)

Die selektive Hydrolyse von P-O-P-Gruppierungen in Polyphosphorsäureestern mit Wasser ist bekannt (Houben-Weyl, Methoden der Organischen Chemie, 4. Aufl., Bd. XII/2, S. 942).

Die Aufgabe der vorliegenden Erfindung bestand nun darin, neue Produkte zu entwickeln, die reaktiv (= einbaufähig) und halogenfrei sind und gleichzeitig eine hohe permanente Flammschutzeffizienz beim Einsatz in Polyurethanschaum besitzen.

Gelöst wird diese Aufgabe durch die Auffindung von Gemischen Hydroxyalkoxygruppen tragender oligomerer Phosphorsäureester

der allgemeinen Formel I,

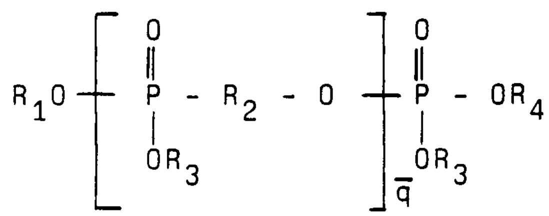

(I)

worin $\bar{q}$ eine durchschnittliche Kettenlänge von o,5 bis 1o, $R_1$ einen hydroxylhaltigen Rest der allgemeinen Formel IIa, $R_2$ einen Rest der allgemeinen Formel III

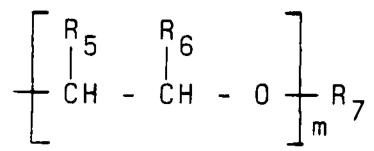

(IIa: $R_7$ = H)

(IIb: $R_7$ = $C_1$-$C_6$)

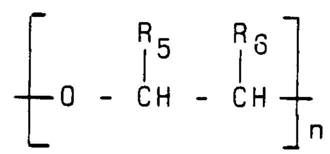

(III)

$R_3$ einen Rest der allgemeinen Formel IIb, $R_4$ = $R_1$ oder $R_3$; $R_5$, $R_6$ und $R_7$ ein H-Atom oder einen Alkylrest mit 1 bis 6 C-Atomen, m = 0 bis 4 und n = 1 bis 4 bedeuten.

Weiterhin betrifft die Erfindung ein mögliches Verfahren zur Herstellung der beschriebenen neuen Gemische Hydroxyalkoxygruppen tragender oligomerer Phosphorsäureester, welches dadurch gekennzeichnet ist, daß man in einer ersten Stufe einen oder mehrere ortho-Phosphorsäureester der allgemeinen Formel IV

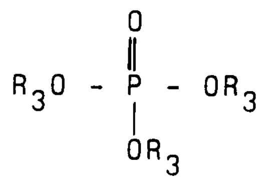

(IV)

mit Phosphorpentoxid im Molverhältnis (2.1 bis 3.5) : 1.o bei einer Temperatur von 2o bis 18o °C innerhalb von o.5 bis 72 Stunden in an sich bekannter Weise umsetzt, in dem erhaltenen Polyphosphorsäureestergemisch der allgemeinen Formel V, worin $\overline{p}$ eine durchschnittliche Kettenlänge von 4 bis 6o bedeutet,

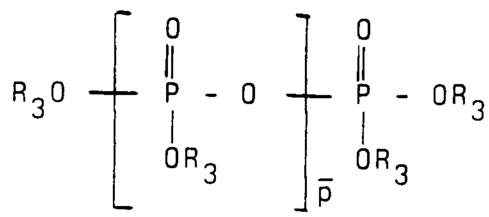

(V)

in einer zweiten Stufe durch Zugabe von Wasser oder einem Glykol der allgemeinen Formel VI,

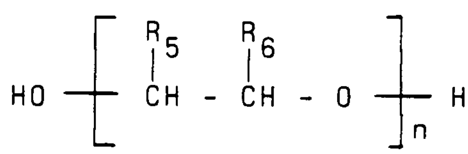

(VI)

wobei $R_5$, $R_6$ und n die oben genannte Bedeutung haben, bei einer Temperatur von 2o bis 1oo °C selektiv die P-O-P-Bindungen partiell hydrolysiert oder glykolysiert und das dabei entstehende Gemisch von Polyphosphorsäurepartialestern der allgemeinen Formel VII,

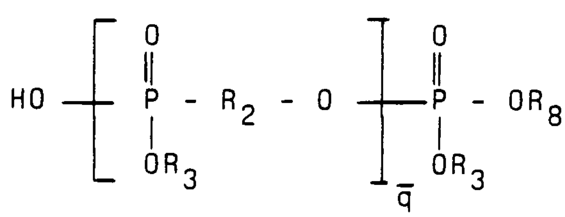

(VII)

worin $R_2$ die oben genannte Bedeutung hat oder gleich null ist, $\overline{q}$ eine verringerte durchschnittliche Kettenlänge von nur

noch o,5 bis 1o bedeutet und $R_8$ die Bedeutung von $R_3$ hat oder ein H-Atom darstellt,
in einer dritten Stufe mit einem Epoxid der allgemeinen Formel VIII bei einer Temperatur von 2o bis 18o °C umsetzt.

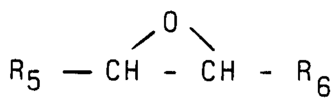

(VIII)

Darüberhinaus kann das Verfahren der Erfindung wahlweise und bevorzugt dadurch gekennzeichnet sein, daß

a) die Umsetzung während der ersten Stufe bei einer Temperatur von 6o bis 12o °C innerhalb von o,5 bis 6 Stunden erfolgt;
b) man die Partialhydrolyse der zweiten Stufe bei 5o bis 8o °C durchführt;
c) man in der zweiten Stufe für die Partialhydrolyse o,2 bis 1,5 Mol Wasser je 1 Mol in der ersten Stufe eingesetzten Ortho-Phosphorsäureester der Formel (IV) zugibt;
d) die Umsetzung in der ersten Stufe in Gegenwart von o,1 bis 2 Masse% Phosphoriger Säure $H_3PO_3$, berechnet auf die Gesamtmenge der Ausgangsstoffe der ersten Stufe, erfolgt;
e) die Umsetzung während der dritten Stufe bei einer Temperatur von 7o bis 14o °C erfolgt.

Bevorzugte Ausgangsstoffe der Formel IV für die erste Verfahrensstufe sind solche mit $R_3$ = Methyl, Ethyl, Butyl und Butoxyethyl, wobei insbesondere Methyl und Ethyl geeignet sind. Als Epoxide der Formel (VIII) kommen vorzugsweise solche in Frage, in denen $R_5$ und $R_6$ ein Wasserstoff- oder Methylradikal bedeuten, insbesondere Ethylenoxid und Propylenoxid.

Die Zusammensetzung des erfindungsgemäß hergestellten Gemisches aus nahezu ausschließlich hydroxylhaltigen Komponenten wird durch folgende Vorgehensweise erreicht. In der ersten Verfahrensstufe wird ein Molverhältnis der Ausgangsstoffe von (2.1 bis 3.5) zu 1 (Produkte der Formel IV : $P_4O_{1o}$) gewählt, wobei man überwiegend Polyphosphorsäureester der Formel V mit hohen durchschnittlichen Kondensationsgraden (p = 4 bis 6o) erhält. Durch die in der zweiten Stufe folgende partielle Hydrolyse bzw. Glykolyse der Polyphosphorsäureester wird durch die eintretende selektive Spaltung von P-O-P-Bindungen der durchschnittliche Kondensationsgrad q auf $\leq$ 1o, vorzugsweise auf 2 bis 5 reduziert. Größere mittlere Kettenlängen führen zu hohen Viskositäten der Endprodukte, was anwendungstechnische Probleme (Dosierung) verursacht; niedrige mittlere Kettenlängen bedingen relativ niedrige Phosphorgehalte im Endprodukt, was zu Einbußen in der Flammschutzeffektivität führt. Es handelt sich bei den entstehenden Produkten um saure Ester der Formel VII, die in der dritten Verfahrensstufe zu den gewünschten Hydroxyalkoxygruppen tragenden Komponenten der Formel I abreagieren.

Das Verfahren der Erfindung erlaubt durch Variation der Art und Mengenverhältnisse der Ausgangsstoffe die Herstellung eines breiten Spektrums von Produkten. Es ist somit geeignet, speziellen Anforderungen z.B. bezüglich der durchschnittlichen Kettenlänge, der Hydroxylzahl, des Phosphorgehaltes sowie der Viskosität gerecht zu werden.

Schließlich betrifft die Erfindung auch die Verwendung der beschriebenen neuen Gemische Hydroxyalkoxygruppen tragender oligomerer Phosphorsäureester als reaktive Flammschutzmittel in Polyurethanschäumen.

Beispiel 1

In einem Reaktor ausgestattet mit Rührer, Thermometer, Gaseinleitungsrohr und Rückflußkühler, wurden 7oo g (3.84 mol) Triethylphosphat und 1o.8 g Phosphorige Säure vorgelegt. Unter Ausschluß von Luftfeuchtigkeit wurden unter starkem Rühren 454.5 g (1.6 mol) $P_4O_{1o}$ so hinzugefügt, daß die Temperatur 4o °C nicht überstieg. Anschließend wurde zunächst eine Stunde auf 6o °C, dann 5 Stunden auf 9o °C erhitzt. Die abgekühlte, gelbliche Reaktionsmischung wurde unter externer Eiskühlung so langsam mit 34.6 g (1.92 mol) Wasser versetzt, daß die Reaktionstemperatur maximal 7o °C erreichte. Nach 1 h Rühren bei 7o °C wurde bei einer Temperatur von 13o bis 14o °C Ethylenoxid eingeleitet, bis starker Rückfluß in dem mit Methanol und Trockeneis beschickten Kühler zu beobachten war. Nach 1 h Nachreaktion bei 13o bis 14o °C wurde der verbliebene Ethylenoxid-Überschuß mittels Durchleiten eines starken Stickstoffstroms aus dem Reaktionsgemisch entfernt. So wurden 1813 g einer schwach gelblichen Flüssigkeit mit einer Brookfield-Viskosität von 157o mPa.s (25 °C), einer Säurezahl von o,9 mg KOH/g sowie einer Hydroxylzahl von 125 mg KOH/g erhalten. Das Produkt (Formel I) mit $\bar{q}$ = 3, $R_3$ = Ethyl (m = 0, $R_7$ = Ethyl), $R_5$ und $R_6$ = H , enthielt 17.7 % Phosphor (Masse%).

Beispiel 2

In einem Reaktionsgefäß analog Beispiel 1 wurden 56o g (3.o8 mol) Triethylphosphat, 9.1 g Phosphorige Säure, 384 g (1.35 mol) $P_4O_{1o}$, 19.9 g (1.1 mol) Wasser und Ethylenoxid entsprechend der in Beispiel 1 angegebenen Vorschrift umgesetzt. Es wurden 14o6 g einer schwach gelblichen Flüssigkeit mit einer Brookfield-Viskosität von 325o mPa.s (25 °C), einer Säurezahl von o.9 mg KOH/g sowie einer Hydroxylzahl von 95 mg KOH/g erhalten. Das Produkt (Formel I) mit $\bar{q}$ = 5, $R_3$ = Ethyl (m = 0, $R_7$ = Ethyl), $R_5$ und $R_6$ = H,enthielt 19.o % Phosphor (Masse%).

Beispiel 3

In einem Reaktionsgefäß analog Beispiel 1 wurden 56o g (3.o8 mol) Triethylphosphat, 3.5 g Phosphorige Säure, 41o g (1.44 mol) $P_4O_{1o}$, 76.4 g (4.24 mol) Wasser und Ethylenoxid entsprechend der in Beispiel 1 angegebenen Vorschrift umgesetzt. Es wurden 2o69 g einer schwach gelblichen Flüssigkeit mit einer Brookfield-Viskosität von 5oo mPa.s (25 °C), einer Säurezahl von o.4 mg KOH/g sowie einer Hydroxylzahl von 225 mg KOH/g erhalten. Das Produkt (Formel I) mit $\bar{q}$ = 1, $R_3$ = Ethyl (m = 0, $R_7$ = Ethyl), $R_5$ und $R_6$ = H, enthielt 13.3 % Phosphor (Masse%).

Beispiel 4

In einem Reaktionsgefäß analog Beispiel 1 wurden 7oo g (5.o mol) Trimethylphosphat, 5.o g Phosphorige Säure, 591.1 g (2.o8 mol) $P_4O_{1o}$ und 45.9 g (2.55 mol) Wasser entsprechend der in Beispiel 1 angegebenen Vorschrift umgesetzt. Anschließend wurde bei einer Temperatur von 7o bis 8o °C Ethylenoxid eingeleitet, bis starker Rückfluß in dem mit Methanol und Trockeneis beschickten Kühler zu beobachten war. Nach 1 h Nachreaktion bei 7o bis 8o °C wurde der verbliebene Ethylenoxid-Überschuß mittels Durchleiten eines starken Stickstoffstroms aus dem Reaktionsgemisch entfernt. Es wurden 228o g einer schwach gelblichen Flüssigkeit mit einer Brookfield-Viskosität von 192o mPa.s (25 °C), einer Säurezahl von o.5 mg KOH/g sowie einer Hydroxylzahl von 122 mg KOH/g erhalten. Das Produkt (Formel I) mit $\bar{q}$ = 3, $R_3$ = Methyl (m = 0, $R_7$ = $CH_3$), $R_5$ und $R_6$ = H, enthielt 18.2 % Phosphor (Masse%).

Beispiel 5

In einem Reaktionsgefäß analog Beispiel 1 wurden 28o g (1.o5 mol) Tributylphosphat, 15 g Phosphorige Säure, 124.4 g (o.44 mol) $P_4O_{1o}$ und 9.5 g (o.53 mol) Wasser entsprechend der in Beispiel 1 angegebenen Vorschrift umgesetzt. Anschließend wurde bei einer Temperatur von 7o bis 8o °C Ethylenoxid eingeleitet, bis starker Rückfluß in dem mit Methanol und Trockeneis beschickten Kühler zu beobachten war. Nach 1 h Nachreaktion bei 1oo °C wurde der verbliebene Ethylenoxid-Überschuß mittels Durchleiten eines starken Stickstoffstroms aus dem Reaktionsgemisch entfernt. Es wurden 62o g einer schwach gelblichen Flüssigkeit mit einer Brookfield-Viskosität von 26o mPa.s (25 °C), einer Säurezahl von o.7 mg KOH/g sowie einer Hydroxylzahl von 161 mg KOH/g erhalten. Das Produkt (Formel I) mit $\bar{q}$ = 3, $R_3$ = Butyl (m = 0, $R_7$ = Butyl), $R_5$ und $R_6$ = H, enthielt 14.8 % Phosphor (Masse%).

Beispiel 6

In einem Reaktionsgefäß analog Beispiel 1 wurden 35o g (o.88 mol) Tris(butoxyethyl)phosphat, 2,5 g Phosphorige Säure, 1o4 g (o.37 mol) $P_4O_{1o}$, 7.9 g (o.44 mol) Wasser und Ethylenoxid entsprechend der in Beispiel 1 angegebenen Vorschrift umgesetzt. Es wurden 598 g einer braunen Flüssigkeit mit einer Brookfield-Viskosität von 35o mPa.s (25 °C), einer Säurezahl von o,2 mg KOH/g sowie einer Hydroxylzahl von 225 mg KOH/g erhalten. Das Produkt (Formel I) mit $\bar{q}$ = 3, $R_3$ = Butoxyethyl (m = 1, $R_7$ = Butyl), $R_5$ und $R_6$ = H, enthielt 12.3 % Phosphor (Masse%).

Beispiel 7

In einem Reaktionsgefäß analog Beispiel 1 wurden 7oo g (3.84 mol) Triethylphosphat, 1o.8 g Phosphorige Säure, 454.5 g (1.6 mol) $P_4O_{1o}$ entsprechend der in Beispiel 1 angegebenen Vorschrift umgesetzt. Anschließend wurde die abgekühlte gelbliche Reaktionsmischung unter externer Eiskühlung so langsam mit 119.2 g (1.92 mol) Ethylenglykol versetzt, daß die Reaktionstemperatur maximal 7o °C erreichte. Nach 1 h Rühren bei 7o °C wurde bei einer Temperatur von 13o bis 14o °C Ethylenoxid eingeleitiet, bis starker Rückfluß in dem mit Methanol und Trockeneis beschickten Kühler zu beobachten war. Nach 1 h Nachreaktion bei 13o bis 14o °C wurde der verbliebene Ethylenoxid-Überschuß mittels Durchleiten eines starken Stickstoffstroms aus dem Reaktionsgemisch entfernt. Es wurden 18o1 g einer schwach gelblichen Flüssigkeit mit einer Brookfield-Viskosität von 142o mPa.s (25 °C), einer Säurezahl von o.7

mg KOH/g sowie einer Hydroxylzahl von 13o mg KOH/g erhalten. Das Produkt (Formel I) mit $\bar{q}$ = 3, $R_3$ = Ethyl (m = 0, $R_7$ = Ethyl), $R_5$ und $R_6$ = H, enthielt 17.6 % Phosphor (Masse%).

Beispiel 8

Das Produkt gemäß Beispiel 1 wurde in einen Polyurethanweichschaum folgender Formulierung (Gewichtsteile) inkorporiert:

| | |
|---|---|
| 1oo Teile | Polyetherpolyol (® Caradol 48-2, Shell) |
| 7.5 Teile | Produkt aus Beispiel 1 |
| 4.o Teile | Wasser |
| o.4 Teile | Dimethylethanolamin |
| o.2 Teile | Zinnoctoat (® Desmorapid SO, Bayer) |
| 1.o Teile | Siliconstabilisator (® Tegostab B 364o, Goldschmidt) |
| 51 Teile | Toluylendiisocyanat (® Desmodur T 8o, Bayer) |

Zur Herstellung des Versuchsschaumes wurden alle Komponenten - mit Ausnahme des Toluylendiisocyanates - intensiv vermischt und anschließend mit diesem versetzt. Nach einer Startzeit von 15 sec, einer Steigzeit von 15o sec und einer Nachbehandlung von 15 min bei 14o °C Umluft wurde ein Polyurethan-Weichschaum mit einem Raumgewicht von 29 kg/$m^3$ erhalten.

Beispiel 9 (Vergleichsbeispiel)

Analog zu Rezeptur und Herstellvorschrift in Beispiel 8 wurde ein Versuchsschaum mit 7.5 Gewichtsteilen, berechnet auf eingesetztes Polyol, eines Produktes gemäß Beispiel 1 der DE-PS 2o 36 595 hergestellt. Nach einer Startzeit von 22 sec, einer Steigzeit von 134 sec und einer wie oben beschriebenen Nachbehandlung wurde ein Polyurethan-Weichschaum mit einem Raumgewicht von 27 kg/$m^3$ erhalten.

Zur Ermittlung der Flammfestigkeit der Versuchsschäume gemäß Beispiel 8 (Schaum A) und Vergleichsbeispiel 9 (Schaum B) wurden die Sauerstoffindices (LOI) nach ASTM-D-2863-77 bestimmt und der amerikanische Test FMVSS-3o2 (FMVSS = Federal Motor Vehicle Safety Standard) durchgeführt.

Gemäß DIN 752o1-G wurden die Schäume bezüglich ihres Foggingverhaltens geprüft.

Folgende Resultate wurden erhalten:

| | Schaum A (erfindungsgemäß) | Schaum B (Vergleich) |
|---|---|---|
| Sauerstoffindex (ASTM-D-2863-77) | 22.5 | 23.o |
| FMVSS 3o2: | | |
| Klassifizierung: | SE[1)] | SE[1)] |
| mittlere Brandstrecke | 22 mm | 24 mm |
| Fogging-Wert G (DIN 752o1 G) | o.6 mg | 2.7 mg |

1) Selbstverlöschend nach einer mittleren Brandstrecke von < 38 mm.

Die Tabelle zeigt deutlich die hervorragende Eignung der erfindungsgemäß hergestellten Produkte bezüglich ihrer Verwendung als reaktive Flammschutzmittel für Polyurethanschäume. Während die ausgezeichneten flammhemmenden Eigenschaften zwar auch von den bekannten Produkten gemäß den DE-PS 2o 36 587 und 2o 36 595 erzielt werden können, dokumentiert sich die Überlegenheit der nach dem Verfahren der Erfindung hergestellten Produkte dadurch, daß diese Effektivität ohne den Einsatz von Halogen erreicht wird sowie durch den deutlich reduzierten Fogging-Wert, der die drastisch erhöhte Migrationsbeständigkeit zum Ausdruck bringt.

Beispiele 1o bis 15

Nach folgender allgemeinen Rezeptur (Gewichtsteile) wurden Polyurethanhartschäume mit Raumgewichten

von 3o bis 35 kg/$m^3$ hergestellt:

| | |
|---|---|
| 1oo Teile | Polyetherpolyol (®Caradol 585-8, Shell) |
| variable Teile | Flammschutzmittel |
| 3.o Teile | Wasser |
| 2.5 Teile | Katalysator (Dimethylcyclohexylamin) |
| 2.o Teile | Siliconstabilisator (® DC 193, Dow Corning GmbH) |
| variable Teile | Treibmittel (R 141 b) |
| variable Teile | Polyisocyanat (® Caradate 3o, Shell), |
| | NCO-Index: 11o |

Zur Beurteilung der Flammwidrigkeit wurden Brandtests nach DIN 41o2 Teil 1 durchgeführt. Für PUR-Hartschäume, die in Deutschland als Baustoffe (Dämmstoffe) eingesetzt werden sollen, ist die Einstufung in die Klasse DIN 41o2 B2 verbindlich vorgeschrieben.

In der nachfolgenden Tabelle sind die Ergebnisse der Brandtests zusammengefaßt:

| Beispiel | Flammschutzmittel | Menge (php)[1)] | DIN 41o2 | |
|---|---|---|---|---|
| | | | Flammenhöhe (mm)[2)] | Klasse |
| 1o | Produkt gemäß Beispiel 1 | 1o | > 15o | B3 |
| 11 | Produkt gemäß Beispiel 1 | 2o | 135-15o | B2 |
| 12 | Produkt gemäß Beispiel 1 | 3o | < 135 | B2 |
| 13 | Tris(chlorisopropyl)phosphat | 1o | > 15o | B3 |
| 14 | Tris(chlorisopropyl)phosphat | 2o | > 15o | B3 |
| 15 | Tris(chlorisopropyl)phosphat | 3o | 135-15o | B2 |

1) php = parts per 1oo parts of polyol
2) Mittelwert aus 5 Einzelmessungen

Die Versuche mit dem Produkt aus Beispiel 1 zeigen dessen hervorragende Eignung als halogenfreies, reaktives Flammschutzmittel für Polyurethanhartschäume. Bereits mit 2o php erreicht man eine DIN 41o2-B2-Einstufung, was bei Verwendung des in großtechnischem Maße eingesetzten Tris(chlorisopropyl) phosphats erst bei einer Dosierung von 3o php erreicht wird. Die Verwendung von Tris(chlorisopropyl)phosphat als Flammschutzmittel in Polyurethanhartschäumen ist in der DE-AS 16 94 43o beschrieben.

## Patentansprüche

1. Gemische Hydroxyalkoxygruppen tragender oligomerer Phosphorsäureester der allgemeinen Formel I

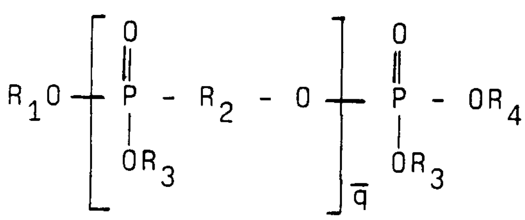

(I)

worin $\bar{q}$ eine durchschnittliche Kettenlänge von o,5 bis 1o, $R_1$ einen hydroxylhaltigen Rest der allgemeinen Formel IIa, $R_2$ einen Rest der allgemeinen Formel III

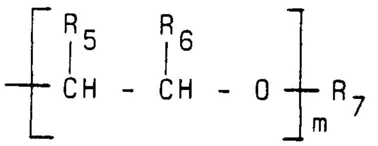 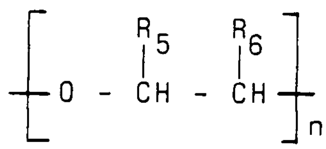

(IIa: $R_7$ = H) (III)

(IIb: $R_7$ = $C_1$-$C_6$)

$R_3$ einen Rest der allgemeinen Formel IIb, $R_4$ = $R_1$ oder $R_3$; $R_5$, $R_6$ und $R_7$ ein H-Atom oder einen Alkylrest mit 1 bis 6 C-Atomen, m = 0 bis 4 und n = 1 bis 4 bedeuten.

**2.** Verfahren zur Herstellung der Gemische gemäß Anspruch 1, dadurch gekennzeichnet, daß man in einer ersten Stufe einen oder mehrere ortho-Phosphorsäureester der allgemeinen Formel IV

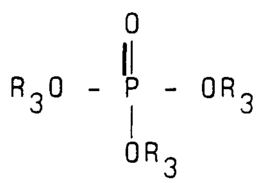

(IV)

mit Phosphorpentoxid im Molverhältnis (2.1 bis 3.5) : 1.o bei einer Temperatur von 2o bis 18o °C innerhalb von o.5 bis 72 Stunden in an sich bekannter Weise umsetzt, in dem erhaltenen Polyphosphorsäureestergemisch der allgemeinen Formel V,

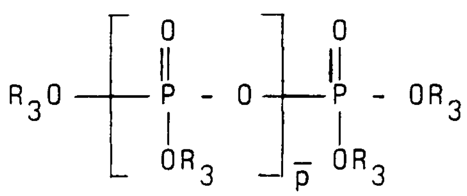

(V)

worin $\bar{p}$ eine durchschnittliche Kettenlänge von 4 bis 6o bedeutet, in einer zweiten Stufe durch Zugabe von Wasser oder einem Glykol der allgemeinen Formel VI,

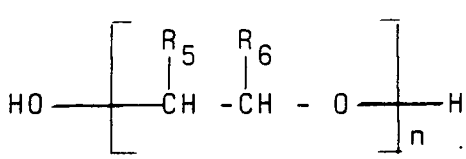

(VI)

wobei $R_5$, $R_6$ und n die oben genannte Bedeutung haben, bei einer Temperatur von 2o bis 1oo °C selektiv die P-O-P-Bindungen partiell hydrolysiert oder glykolysiert und das dabei entstehende Gemisch von Polyphosphorsäurepartialestern der allgemeinen Formel VII,

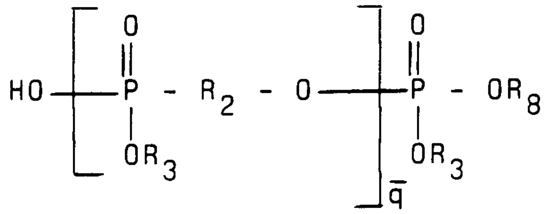

(VII)

worin $R_2$ die oben genannte Bedeutung hat oder gleich null ist, $\bar{q}$ eine verringerte durchschnittliche Kettenlänge von nur noch o,5 bis 1o bedeutet und $R_8$ die Bedeutung von $R_3$ hat oder ein H-Atom darstellt, in einer dritten Stufe mit einem Epoxid der allgemeinen Formel VIII bei einer Temperatur von 2o bis 18o °C umsetzt.

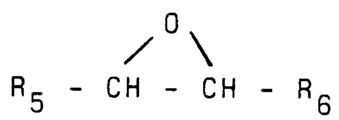

(VIII)

3. Verwendung der Gemische gemäß Anspruch 1 als reaktive Flammschutzmittel in Polyurethanschäumen.

**Claims**

1. A mixture of oligomeric phosphoric acid esters which carry hydroxyalkoxy groups, of the formula I

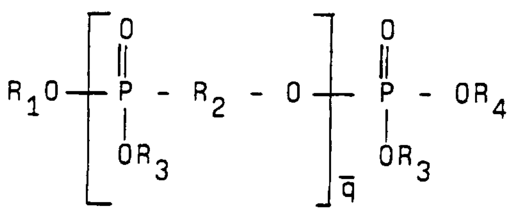

(I)

in which $\bar{q}$ denotes an average chain length of 0.5 to 10, $R_1$ is a hydroxyl-containing radical of the formula IIa, $R_2$ is a radical of the formula III

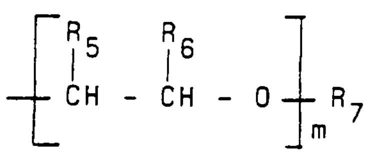

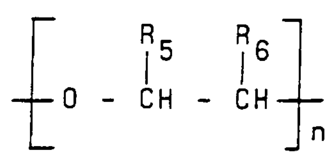

(IIa: $R_7$ = H)
(IIb: $R_7$ = $C_1$-$C_6$)

(III)

$R_3$ is a radical of the formula IIb, $R_4$ is $R_1$ or $R_3$; $R_5$, $R_6$ and $R_7$ are an H atom or an alkyl radical having 1 to 6 carbon atoms, m is 0 to 4 and n is 1 to 4.

2. A process for the preparation of the mixture as claimed in claim 1, which comprises reacting one or more ortho-phosphoric acid esters of the formula IV

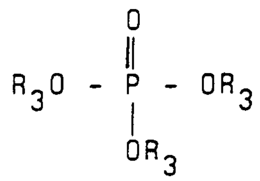

(IV)

with phosphorus pentoxide in a molar ratio of (2.1 to 3.5) : 1.0 in a first stage at a temperature of 20 to 180°C in the course of 0.5 to 72 hours in a manner which is known per se, partly hydrolyzing or glycolyzing the P-O-P bonds selectively in the resulting polyphosphoric acid ester mixture of the formula V,

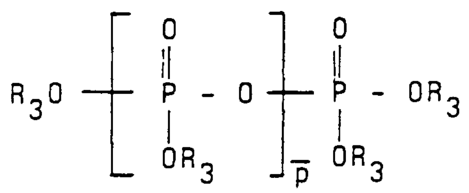

(V)

in which $\bar{p}$ denotes an average chain length of 4 to 60, in a second stage by addition of water or a glycol of the formula VI

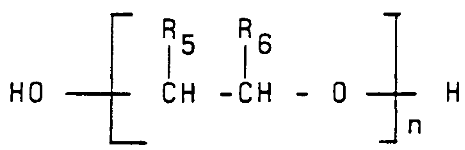

(VI)

in which $R_5$, $R_6$ and n have the abovementioned meaning, at a temperature of 20 to 100°C, and reacting the resulting mixture of polyphosphoric acid partial esters of the formula VII

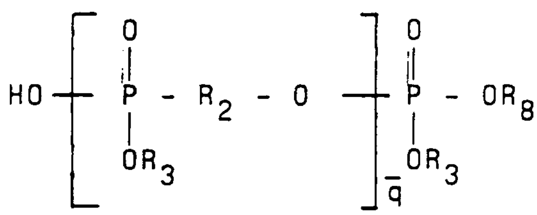

(VII)

in which $R_2$ has the abovementioned meaning or is zero, $\bar{q}$ denotes a reduced average chain length of only 0.5 to 10 and $R_8$ has the meaning of $R_3$ or is an H atom, with an epoxide of the formula VIII in a third stage at a temperature of 20 to 180°C.

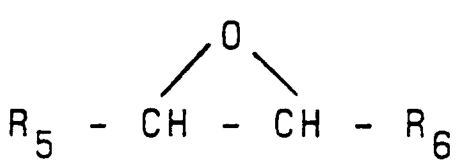

(VIII)

**3.** The use of the mixture as claimed in claim 1 as a reactive flameproofing agent in polyurethane foams.

## Revendications

1. Mélanges d'esters phosphoriques oligomères portant des groupes hydroxyalcoxy, répondant à la formule générale I

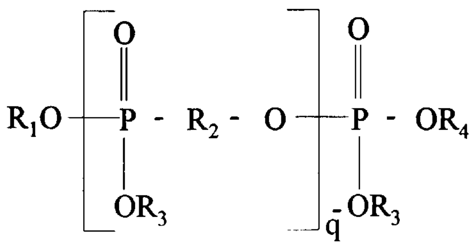

(I)

dans laquelle $\bar{q}$ correspond à une longueur de chaîne moyenne de 0,5 à 10, $R_1$ représente un radical, portant des groupes hydroxy, de formule générale IIa, $R_2$ représente un groupe de formule générale III

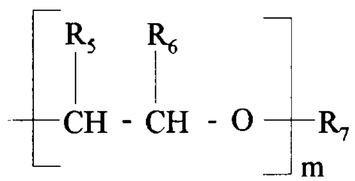

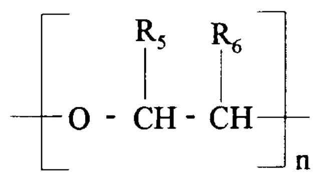

(IIa : $R_7$ = H)
(IIb : $R_7$ = $C_1$-$C_6$)

(III)

$R_3$ représente un groupe de formule générale IIb, $R_4$ = $R_1$ ou $R_3$ ; $R_5$, $R_6$ et $R_7$ représentent des atomes d'hydrogène ou des groupes alkyle en $C_1$-$C_6$, m = 0 à 4 et n = 1 à 4.

2. Procédé de préparation des mélanges de la revendication 1, caractérisé en ce que, dans un premier stade opératoire, on fait réagir de manière connue en soi un ou plusieurs esters orthophosphoriques de formule générale IV

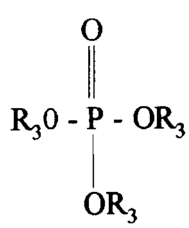

(IV)

avec le pentoxyde de phosphore dans un rapport molaire de 2,1 à 3,5 : 1,0 à une température de 20 à 180°C et en une durée de 0,5 à 72 h, ce qui donne un mélange d'esters polyphosphoriques de formule générale V

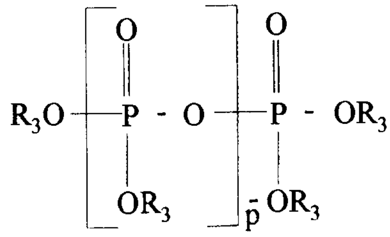

(V)

dans laquelle $\bar{p}$ correspond à une longueur de chaîne moyenne de 4 à 60, dans lequel, au deuxième stade opératoire, sélectivement, on hydrolyse ou glycolyse partiellement les liaisons P-O-P par addition d'eau ou d'un glycol de formule générale VI

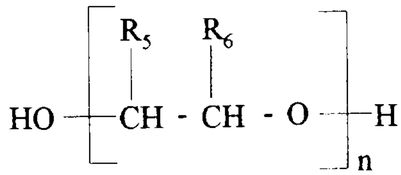

(VI)

dans laquelle $R_5$, $R_6$ et n ont les significations indiquées ci-dessus, à une température de 20 à 100°C, ce qui donne un mélange d'esters partiels polyphosphoriques de formule générale VII

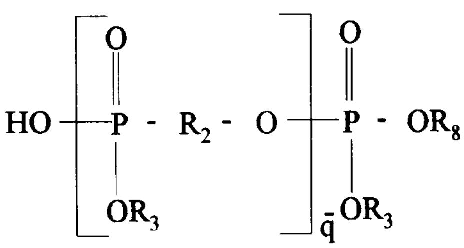

(VII)

dans laquelle $R_2$ a les significations indiquées ci-dessus ou a disparu, $\bar{q}$ correspond à une longueur de chaîne moyenne diminuée, de 0,5 à 10 seulement, et $R_8$ a les significations de $R_3$ ou représente un atome d'hydrogène, qu'on fait réagir dans un troisième stade avec un époxyde de formule générale (VIII) à une température de 20 à 180°C

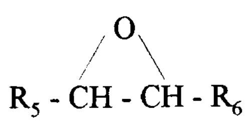

(VIII)

**3.** Utilisation des mélanges selon revendication 1 en tant qu'agents ignifugeants réactifs dans des mousses de polyuréthane.